# EUROPÄISCHE PATENTANMELDUNG

(11) **EP 4 726 762 A1**
(43) Veröffentlichungstag der Anmeldung: **15.04.2026**
(21) Anmeldenummer: 24205916.0
(22) Anmeldetag: 10.10.2024
(51) Int. Cl.: H01J 9/24, H01J 9/395, H01J 9/40, H01J 65/08, C03B 23/18

(54) **PROZESSKAMMER ZUR BEFÜLLUNG UND VERSIEGELUNG EINES GLASHOHLKÖRPERS, VERFAHREN DAZU SOWIE GLASKAPSEL**

(71) Anmelder: smolsys AG, 6039 Root D4 (CH)
(72) Erfinder: BURKHALTER, Patrick, 3412 Heimiswil (CH)
(74) Vertreter: Zwick, Evelyn

(57) **Zusammenfassung**

Die Erfindung betrifft eine Prozesskammer (10) mit einem Füllraum (11) und einen Prozessraum (12) zur Befüllung und Versiegelung eines Glashohlkörpers (20) mit einem offenen Endbereich (21) und einem geschlossenen Körper (22), der mit einem Füllgas (23) aus Tritium, Deuterium und/oder Protium gefüllt und gasdicht versiegelt werden soll. Der Füllraum (11) ist mit einer Vakuumpumpe (31a) verbunden und mit einer Druckregeleinrichtung (32a, zum Befüllen des Füllraums (11) mit dem Füllgas (23) bis zu einem Fülldruck (P1), der grösser ist als der Umgebungsdruck (P3), und zur Entnahme von restlichem Füllgas (23) aus dem Füllraum (11), sowie mit einem Druckausgleichsventil (33a). Der Prozessraum (12) weist eine Druckregeleinrichtung (32b) auf zum Erzielen eines vorgegebenen Prozessdrucks (P2) im Prozessraum (12), der höher ist als der Fülldruck (P1), und ein Druckausgleichsventil (33b). Zwischen dem Füllraum (11) und dem Prozessraum (12) ist eine abdichtbare Durchführung (13a) ausgebildet, zum Durchführen eines offenen Endbereichs (21) des Glashohlkörpers (20). Der Prozessraum (12) verfügt über eine Abschmelzzone (16) mit einem Heizmittel (17) zum lokalen Erwärmen des Glashohlkörpers (20). Die Erfindung betrifft auch ein Verfahren zum Befüllen und Versiegeln eines Glashohlkörpers (20) und eine befüllte und versiegelte Glaskapsel (25).

## Beschreibung

Die Erfindung betrifft eine Prozesskammer zur Befüllung und Versiegelung eines Glashohlkörpers mit einem offenen Endbereich und einem geschlossenen Körper, der mit einem Füllgas, bestehend bei Standardbedingungen (1 bar, 20°C) zu mindestens 50vol% aus Tritium, Deuterium und/oder Protium, gefüllt und gasdicht versiegelt werden soll. Die Erfindung betrifft ebenso ein Verfahren zu dessen Befüllung und Versiegelung sowie eine dadurch entstandene Glaskapsel.

### Stand der Technik

Als Beispiel einer solchen Glaskapsel wir hier das GTLS «Tritium Gaseous Light Sources» genannt. Diese Tritium Gas Lichtquellen werden seit den 1950er Jahren hergestellt. Dabei handelt es sich um einen Glashohlkörper, welcher mit dem Tritium Gas befüllt wurde. Zuvor kann die Innenseite des Glashohlkörpers mit einem nachleuchtenden Pigment beschichtet werden, um die gewünschte Farbe zu erreichen. Diese Glaskapseln leuchten selbständig während über 20 Jahren. Sie können sehr klein hergestellt werden und sind beispielsweise bekannt als Leuchtpunkte in Uhren oder als Instrumentenhilfe im Cockpit von Flugzeugen, damit die Piloten auch nachts bei plötzlichem Stromausfall die Instrumente bedienen können.

Da das Tritium Gas radioaktiv ist, ist die Handhabung damit streng reglementiert. Zudem muss der Verschluss absolut sicher versiegelt sein. Für die anderen verwendeten Gase Deuterium und Protium und deren Gemische gelten ebenso strikte Bestimmungen zur Handhabung und zur gasdichten Verschliessung, insbesondere aus Gründen der Explosionsgefahr. Die Gase dienen jeweils als Energieträger.

Weitere Anwendungsbeispiele solcher befüllten Glaskapseln sind Diamantbatterien oder First Light Fusion. Bei Diamantbatterien werden einkristalline Nanodiamanten in eine beispielsweise linsenförmige Glashohlscheibe gebracht und mit dem Gas befüllt, um anschliessend zwischen 9'000 und 28'000 Jahre lang kleine Mengen Strom zu liefern.

Die GTLS-Glaskapseln sind eine der wichtigsten Anwendungsbereiche. Das Tritium Gas ist der Energieträger, welcher die Energie abgibt. Je mehr Stoffmenge des Gases in den Glaskörper gebracht wird, desto heller leuchtet dieser.

Nach dem Stand der Technik werden die Glashohlkörper, die in der Regel die Form eines langen, einseitig verschlossenen Rohres haben oder zumindest in Bereich der Füllöffnung als Rohr ausgestaltet ist, mit einer Flamme zu geschmolzen. Der Innendruck darf während des Verschliessens nicht höher als der Umgebungsdruck sein, damit die Nahtstelle nicht aufplatzt und das Tritium Gas nicht an der Luft verbrennt. Daher wird in der Regel mit einem Innendruck von 350 bis 950 mbar befüllt. Zusätzlich kann ein Teil des Glashohlkörpers während dem Füllprozess abgekühlt werden, beispielsweise mit flüssigem Stickstoff. So kann der effektive Enddruck bei widererlangter Raumtemperatur entsprechend dem Gesetz von Amontons bis zu einem bestimmten Mass erhöht werden. Nach diesem Gesetz steigt der Druck p proportional zur Temperaturerhöhung T in Kelvin, wenn die Stoffmenge n und das Volumen V konstant sind.

### Darstellung der Erfindung

Es ist die Aufgabe der vorliegenden Erfindung, eine eingangs dargelegte Prozesskammer zu beschreiben, mit der die Füllmenge der genannten Füllgase in einer Gaskapsel weiter erhöht werden kann, oder die bei gleicher Füllmenge einfacher und somit preisgünstiger hergestellt werden kann. Zudem soll ein Verfahren zum Befüllen und Versiegeln eines solchen Glashohlkörpers beschrieben werden sowie eine durch dieses Verfahren befüllte und versiegelte Glaskapsel.

Die Aufgaben werden gelöst durch die Merkmale in den unabhängigen Patentansprüchen in den jeweiligen Kategorien.

Erfindungsgemäss weist die Prozesskammer einen Füllraum sowie einen Prozessraum auf, die im Gebrauch jeweils gasdicht und druckfest verschlossen sind. Somit kann jede dieser Räume mit einem anderen vorgegebenen Druck beaufschlagt werden.

Der Füllraum ist mit einer Vakuumpumpe zur Entleerung des Füllraums verbunden sowie mit einer Druckregeleinrichtung. Diese ist mit einem Füllgas-Behälter verbindbar, zum Befüllen des Füllraums mit dem Füllgas bis zu einem vorgegebenen Fülldruck ≥ 1'000 mbar. Die Druckregeleinrichtung ermöglicht auch die Entnahme von restlichem Füllgas aus dem Füllraum, vorzugsweise zu dessen Rückführung in den Füllgas-Behälter. Zudem weist der Füllraum ein Druckausgleichsventil auf, um Umgebungsdruck im entleerten Füllraum zu erzielen.

Der Prozessraum weist eine Druckregeleinrichtung auf, zum Erzielen eines vorgegebenen Prozessdrucks im Prozessraum, der höher ist als der Fülldruck, und ein Druckausgleichsventil, um Umgebungsdruck im Prozessraum zu erzielen.

Zwischen dem Füllraum und dem Prozessraum ist eine druckdicht abdichtbare Durchführung ausgebildet, zum Durchführen eines offenen Endbereichs des Glashohlkörpers aus dem Prozessraum in den Füllraum. Beim Gebrauch soll die Öffnung des Glashohlkörpers mit einem Teil des Endbereichs des Glashohlraums im Füllraum angeordnet sein, während der Rest des Endbereichs und mindestens ein Teil des übrigen Glashohlraums im Prozessraum liegt.

Zudem verfügt der Prozessraum über eine Abschmelzzone mit einem Heizmittel zum lokalen Erwärmen des Glashohlkörpers in dieser Abschmelzzone bis zu seiner lokalen plastischen Verformbarkeit. Die Abschmelzzone ist definiert als die Zone, in der das Heizmittel beim Gebrauch die lokale Erwärmung erzeugen kann.

In der Folge wird das erfindungsgemässe Verfahren zum Befüllen eines Glashohlkörpers mit einem Füllgas aus mindestens 50vol% Tritium, Deuterium und/oder Protium bei Standardbedingungen (1bar, 20°C) beschrieben, sowie das gasdichte Verschliessen des Glashohlkörpers zu einer Glaskapsel. Dazu wird eine oben beschriebene Prozesskammer verwendet und ein Glashohlkörper mit einem geschlossenen Körper und einem offenen Endbereich zur Befüllung.

Der Glashohlkörper wird derart in die Prozesskammer eingebracht, dass er die Abschmelzzone durchquert und dass der offene Endbereich von der Abschmelzzone her die Durchführung durchquert und mit seiner Öffnung im Füllraum endet. Der geschlossene Körper befindet sich mindestens teilweise im Prozessraum.

Die Durchführung wird gegen den Glashohlkörper druckfest verschlossen. Die Durchführung ist dann sowohl zum Endbereich des Glashohlkörpers als auch zum Füllraum und zum Prozessraum druckdicht abgedichtet. Auch allfällige weitere Durchgänge werden verschlossen. Nun sind beide Räume sowohl gegeneinander als auch gegen die Umwelt druckdicht verschlossen. Der Füllraum ist fluidtechnisch mit dem gesamten Innenraum des Gashohlkörpers verbunden.

Anschliessend erfolgt der Füllprozess. Dazu wird der Füllraum mit der Vakuumpumpe vakuumieret und schliesslich mit der Druckregeleinrichtung mit dem Füllgas bis zum gewünschten Fülldruck P1 gefüllt, wobei sich das Füllgas im Innern des Glashohlkörpers ausbreitet.

Der Prozessraum wird mit der Druckregeleinrichtung unter den vorgesehenen Prozessdruck P2 gesetzt, der um mindestens 10 mbar, vorzugsweise um 100 mbar grösser ist als der Fülldruck P1.

Nachdem diese Druckverhältnisse hergestellt sind, wird die Abschmelzzone im Prozessraum mit dem Heizmittel erwärmt, bis der Glashohlkörper dort plastisch geworden ist und durch den geringeren Innendruck im Glashohlkörper nach innen gedrückt wird, wodurch der Glashohlkörper lokal versiegelt wird und so eine versiegelte Glaskapsel mit einer sauberen und hermetisch verschlossenen Siegelstelle entstanden ist.

Der Füllprozess ist nun beendet. Das Füllgas wird mit der Druckregeleinrichtung wieder aus dem Füllraum herausgepumpt und die Druckausgleichsventile beider Räume werden geöffnet, bis im Füllraum und im Prozessraum Umgebungsdruck erreicht ist. Der druckfeste Verschluss bei der Durchführung wird wieder geöffnet und die gefüllte versiegelte Glaskapsel wird aus der Prozesskammer entnommen.

Die erfindungsgemässe Glaskapsel ist befüllt und gasdicht versiegelt nach dem oben beschriebenen Verfahren und weist einen Enddruck, also einen Fülldruck bei Raumtemperatur von mindestens 4'000 mbar, vorzugsweise mindestens 5'000 mbar oder mindestens 7'000 mbar auf.

Gemäss einer bevorzugten Variante kann der geschlossene Körper des Gashohlkörpers aus dem Prozessraum herausragen und von einem Kühlraum umhüllt werden, der beispielsweise mit flüssigem Stickstoff gekühlt ist.

Dadurch, dass der Raum um die Abschmelzzone beim erfindungsgemässen Verfahren in einem Prozessraum stattfindet, der unter einen gewünschten Überdruck gebracht werden kann, kann als Fülldruck P1 auch Umgebungsdruck (Atmosphärendruck) oder ein höherer Druck eingestellt werden. Je höher der Fülldruck P1 während der Füllung ist, desto mehr Füllgas wird im versiegelten Glashohlkörper sein. Der Fülldruck P1 kann 1'000, aber auch 1'300, 2'000 oder sogar bis 3'500 mbar oder mehr sein, wobei sich ein Fülldruck P1 von 1300 oder 3'500 mbar jeweils +/- 10% als geeignet erwiesen hat. Wenn der grösste Teil des geschlossenen Körpers des Glashohlkörpers während dem Füllprozess zusätzlich gekühlt wird, so werden in der Glaskapsel Enddrücke bei Raumtemperatur von 4'600 bis über 12'000 mbar erreicht. Der Enddruck hängt vom Fülldruck P1 und der Kühltemperatur ab sowie vom Volumenanteil des geschlossenen Körpers, der sich beim Füllprozess im Kühlraum befindet. Die Abschmelzzone sollte deshalb möglichst nahe am Kühlraum sein. Die Leuchtkraft von GLTS-Kapseln resp. die Energiedichte des Gases erhöht sich mit höherem Enddruck.

Wichtig bleibt auch bei diesem Verfahren, dass der Druck in der Abschmelzzone höher ist als im Glasinnenrohr, wenn die Abschmelzzone erhitzt und die hermetische Siegelstelle geschaffen wird, indem das plastisch gewordene Glas durch den Unterdruck nach innen gedrückt wird. Nur so kann sicher gewährleistet werden, dass keine Füllgase austreten, die sich allenfalls entzünden würden, wodurch es zur Explosion und/oder zum Austritt gesundheitsschädlicher Gase kommen könnte.

Selbst wenn nicht gekühlt wird, so besteht der Vorteil des erfindungsgemässen Verfahrens und somit der Prozesskammer darin, dass auf die Kühlkammer und insbesondere auf den flüssigen Stickstoff verzichtet werden kann, was das Verfahren vereinfacht und dieses dadurch preisgünstiger wird, bei gleichzeitig erreichtem hohen Enddruck in der Glaskapsel.

Zusätzlich besteht mit der Kühlung die Möglichkeit, sehr viel höhere Enddrücke zu erreichen und somit sehr viel mehr Energie in die Glaskapsel zu bringen. Die Grenzen werden durch die Glasstärke des Glashohlkörpers gesetzt, da diese nicht platzen dürfen. Als Glas kann Borosilikat Glas, Quarzglas, Sodalime Glas, Aluminium-Silikat-Glas oder jegliche andere Form von Glas verwendet werden.

Als zusätzliche Sicherheit kann die gesamte Prozesskammer in einer umhüllenden Sicherheitskammer eingerichtet sein, die in einem Zwischenfall frei gewordene Gase auffängt.

### Kurze Beschreibung der Zeichnungen

Im Folgenden wird die Erfindung in verschiedenen Zeichnungen dargestellt und mit Hilfe der später erläuterten Bezugszeichen näher erklärt. Es zeigen:
- Fig. 1: Eine schematische Darstellung einer einfachen Prozesskammer;
- Fig. 2: Eine schematische Darstellung einer bevorzugten Prozesskammer mit Kühlraum;
- Fig. 3a: Eine schematische Darstellung einer leeren Prozesskammer;
- Fig. 3b: Eine schematische Darstellung einer Prozesskammer mit Dichtungen;
- Fig. 4: Eine schematische Darstellung nach Fig. 2 für mehrere Glashohlkörper;
- Fig. 5 a, b: Beispiele von gefüllten Glaskapseln.

### Wege zur Ausführung der Erfindung

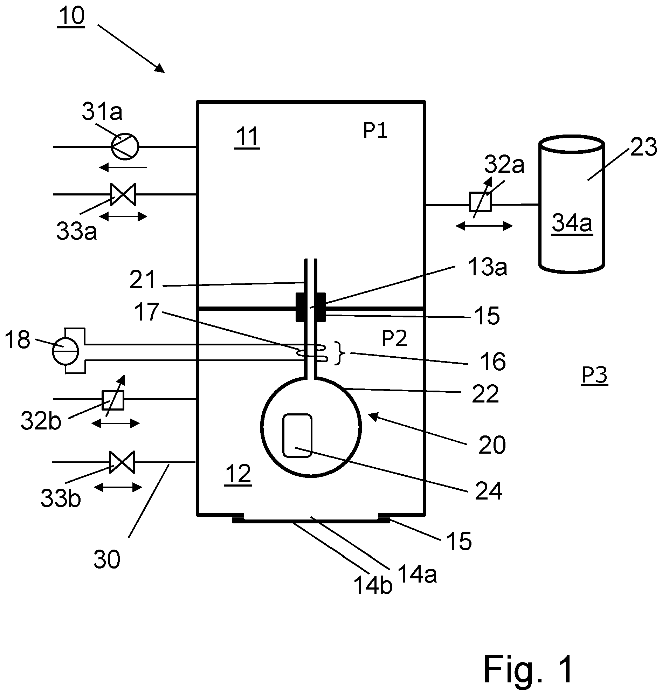

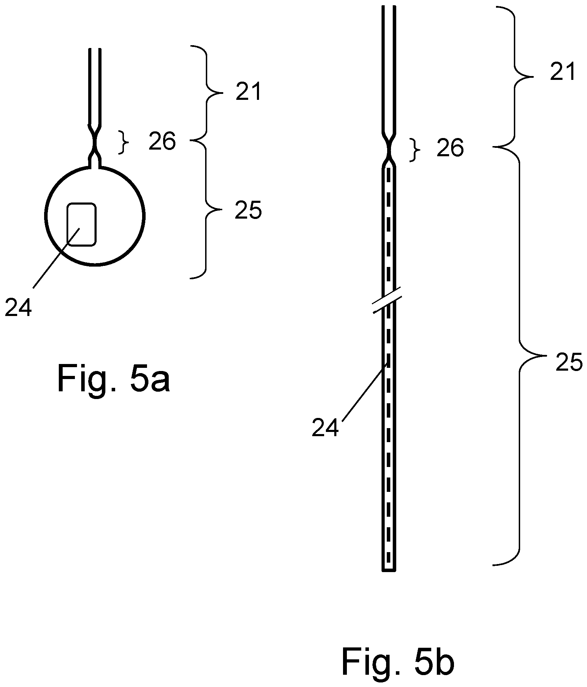

In Fig. 1 ist eine erfindungsgemässe Prozesskammer 10 in einfacher Art zur Befüllung eines Glashohlkörpers 20 mit einem offenen Endbereich 21 und einem geschlossenen Körper 22 dargestellt, der mit einem Füllgas 23, bestehend bei Standardbedingungen (1bar, 20°C) zu mindestens 50vol% aus Tritium, Deuterium und/oder Protium, gefüllt und zu einer Glaskapsel 25 gasdicht versiegelt werden soll. Beispiele solcher Glaskapseln 25 sind in Fig. 5a, 5b dargestellt. Der offene Endbereich 21 ist in diesen Ausführungen noch an der Glaskapsel 25 angebracht, direkt anschliessend an eine Siegelstelle 26. Bei der Produktion von GTLS-Kapseln wird ein Füllgas 23 mit einem Tritium-Anteil von mindestens 80, 90 oder 95% verwendet.

Die Prozesskammer 10 weist einen Füllraum 11 sowie einen Prozessraum 12 auf, die im Gebrauch jeweils gasdicht und druckfest verschlossen sind.

Der Füllraum 11 ist mit einer Vakuumpumpe 31a zur Entleerung des Füllraums 11 verbunden. Zudem ist er mit einer Druckregeleinrichtung 32a verbunden, die mit einem Füllgas-Behälter 34a verbindbar ist, zum Befüllen des Füllraums 11 mit dem Füllgas 23 bis zu einem vorgegebenen Fülldruck P1 ≥ 1'000 mbar. Die Druckregeleinrichtung 32a dient auch zur Entnahme von restlichem Füllgas 23 aus dem Füllraum 11. Dieses kann in den Füllgas-Behälter 34a oder in einen anderen Behälter zurückgeführt werden. Der Füllraum 11 ist zudem mit einem Druckausgleichsventil 33a versehen, um bei entleertem Füllraum 11 wieder Umgebungsdruck P3 im Füllraum 11 zu erzielen.

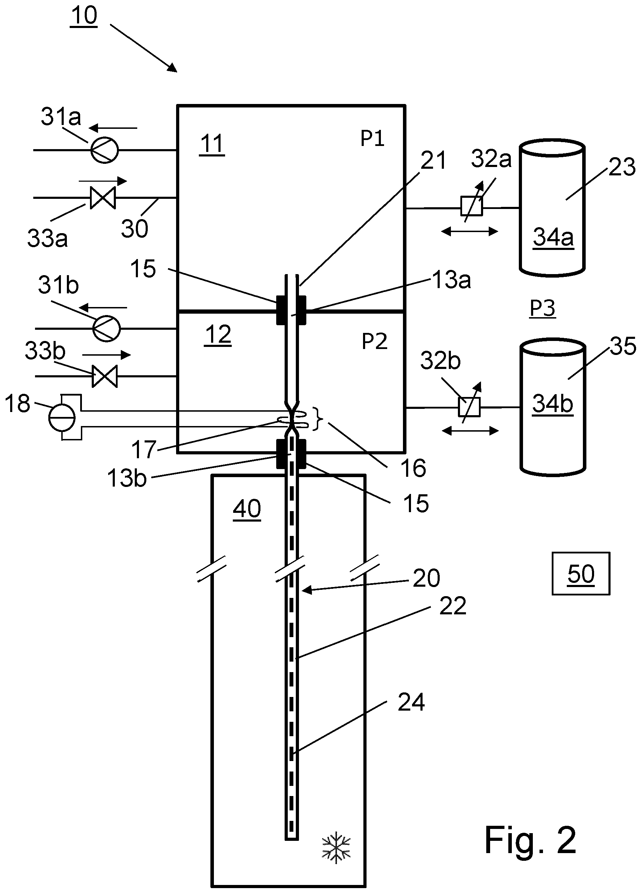

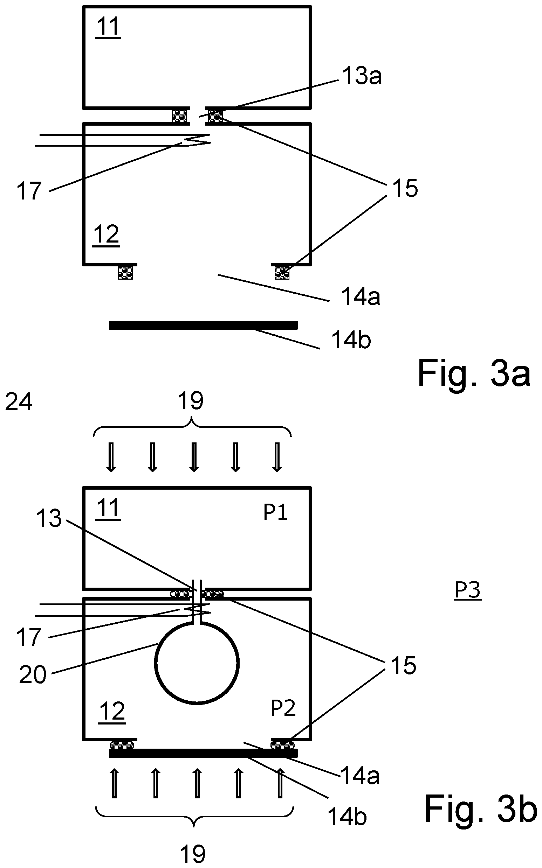

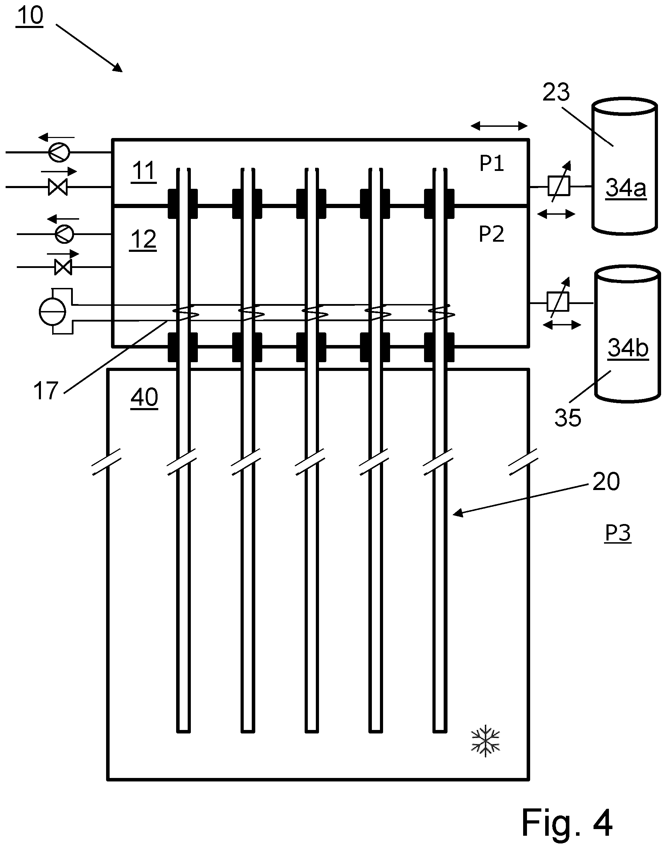

Der in den Figuren dargestellte Prozessraum 12 weist einen druckdicht abdichtbaren Durchgang 13b, dargestellt in Fig. 2 und 4, oder eine Öffnung 14a mit druckdicht abdichtbarer Abdeckung 14b auf, dargestellt in Fig. 1 und Fig. 3a, b, zur partiellen oder vollständigen Einführung eines Glashohlkörpers 20 in den Prozessraum 12. Zudem verfügt er über eine Druckregeleinrichtung 32b zum Erzielen eines vorgegebenen Prozessdrucks P2 im Prozessraum 12, der höher ist als der Fülldruck P1, und über ein Druckausgleichsventil 33b, um Umgebungsdruck P3 im Prozessraum 12 zu erzielen. In dieser einfachen Ausführung können die Druckregeleinrichtung 32b und das Druckausgleichsventil 33b in einer einzigen Komponente ausgestaltet sein.

Zwischen dem Füllraum 11 und dem Prozessraum 12 ist eine druckdicht abdichtbare Durchführung 13a ausgebildet, zum Durchführen eines offenen Endbereichs 21 des Glashohlkörpers 20 aus dem Prozessraum 12 in den Füllraum 11. Zudem verfügt der Prozessraum 12 über eine Abschmelzzone 16 mit einem Heizmittel 17, zum lokalen Erwärmen eines Glashohlkörpers 20, der diese Abschmelzzone 16 im Gebrauch durchläuft, bis zu seiner lokalen plastischen Verformbarkeit.

Die Prozesskammer 10 dient dem Verfahren zum Befüllen eines beschriebenen Glashohlkörpers 20 mit dem beschriebenen Füllgas 23, und zum gasdichten Versiegeln des Glashohlkörpers 20 zu einer Glaskapsel 25.

Das Verfahren umfasst die folgenden Schritte: Der Glashohlkörper 20 wird derart in die Prozesskammer 10 eingebracht, dass er die Abschmelzzone 16 durchquert, wobei der offene Endbereich 21 von der Abschmelzzone 16 her den Durchgang 13a durchquert und im Füllraum 11 endet. Der geschlossene Körper 22 ist dann entweder vollständig im Prozessraum 12, wie in Fig. 1 dargestellt, oder ragt durch den Durchgang 13b aus dem Prozessraum 12 herausragt, wie in Fig. 2 ersichtlich.

In dieser Stellung des Glashohlkörper 20 wird die Durchführung 13a gegen den Glashohlkörper 20 druckfest verschlossen und entweder wird der Durchgang 13b druckfest gegen den Glashohlkörper 20 oder die Abdeckung 14b druckfest gegen die Öffnung 14a verschlossen. Die Vorbereitung ist nun abgeschlossen, es folgt der Füllprozess.

Es wird hier festgehalten, dass eine gasdicht verschliessbare Öffnung der Prozesskammer 10 zur Einbringung und Entnahme des Glashohlkörpers 20 implizit vorhanden sein muss. Möglichkeiten der Abdeckung 14b zum Prozessraum 12 und der Durchgang 13b sind hier beschrieben und dargestellt. Andere Varianten sind eine solche Abdeckung zum Füllraum 11 oder ein Öffnungsmechanismus zur gesamten Prozesskammer 10 wie etwa eine Kühlschranktüre, die gleichzeitig Zugang zum Füllraum 11 und zum Prozessraum 12 ermöglicht, mit entsprechend umlaufender und mittiger, gasdichter Dichtung. Dies vereinfacht das Hantieren mit dem Glashohlkörper 20, erhöht aber die Anforderungen an die Dichtungen. In der Folge wird nicht mehr explizit auf diese oder andere Möglichkeiten der Zugänglichkeit eingegangen.

Für den Füllprozess wird der Füllraum 11 zunächst mit der Vakuumpumpe 31 a vakuumieret und schliesslich mit der Druckregeleinrichtung 32a, die im Gebrauch mit einem Füllgas-Behälter 34a strömungstechnisch verbunden ist, mit dem Füllgas 23 bis zum gewünschten Fülldruck P1 gefüllt. Das Füllgas 23 breitet sich im Füllraum 11 sowie im Innern des Glashohlkörpers 20 aus.

Der Fülldruck P1 kann zwischen 1'000 mbar und 3'500 mbar betragen. Bei geeignetem Glas kann er auch höher sein, bis 5'000 oder bis 7'000 mbar. Der Prozessraum 12 wird mit der Druckregeleinrichtung 32b unter den vorgesehenen Prozessdruck P2 gesetzt, der um mindestens 10 mbar grösser ist als der Fülldruck P1. Vorzugsweise ist er um etwa 100 mbar oder bis zu 200 mbar höher als der Fülldruck P1.

Es wird hier betont, dass die Reihenfolge der Einrichtung der beiden Drücke P1, P2 in den Räumen 11, 12 nicht vorgegeben ist. Die Räume 11, 12 können auch gleichzeitig mit den Drücken P1 und P2 eingerichtet werden. Allerdings ist die Sicherheit erhöht, wenn erst der Prozessraum 12, dann der Füllraum 11 mit Druck beaufschlagt werden. Sollte der Durchfang 13a ein Leck haben, so würde niemals Füllgas in den Prozessraum gelangen.

Nachdem beide Drücke P1, P2 in den beiden Räumen 11, 12 eingerichtet sind, kann der Prozess zum Versiegeln des Glashohlkörpers 20 beginnen. Mit dem Heizmittel 17 wird die Abschmelzzone 16 im Prozessraum 12 erwärmt, bis der Glashohlkörper 20, der die Abschmelzzone 16 durchquert, dort plastisch geworden ist. Durch den geringeren Innendruck P1 im Glashohlkörper 20 wird er dort, im plastisch gewordenen Bereich, nach innen gedrückt. Dadurch wird der Glashohlkörper 20 lokal versiegelt zur Schaffung einer Glaskapsel 25. An der Siegelstelle 16, siehe Fig. 5a, 5b, ist der Glashohlkörper 20 nun hermetisch verschlossen.

Insbesondere kann das Heizmittel 17 einen Heizdraht, eine Gasflamme oder einen Laser umfassen. In den Figuren ist jeweils ein Heizdraht visualisiert. Eine Energieversorgung 18 kann das jeweilige Heizmittel 17 als Stromquelle speisen resp. mit Gas versorgen. Die Prozesskammer 12 kann daher elektrische und/oder andere Durchführungen wie eine Gasleitung aufweisen, wie für das Heizmittel 17 dargestellt. Ein Laser kann ohne Durchführungen verwendet werden. Weitere Durchführungen, nicht dargestellt, können im Füllraum 11 und im Prozessraum 12 angebracht sein, beispielsweise zur Installation von Druck- und/oder Temperatursensoren. Leitungen 30 als strömungstechnische Verbindungen sind entsprechend zu allen Druckregeleinrichtungen 32, Vakuumpumpen 31 und Druckausgleichsventilen 33 vorgesehen.

Um das Verfahren abzuschliessen, muss die Glaskapsel 25 der Prozesskammer 10 entnommen werden. Dazu wird erst das Füllgas 23 mit der Druckregeleinrichtung 32a wieder aus dem Füllraum 11 herausgepumpt und wieder in den Füllgas-Behälter 34a oder in einen anderen Behälter gebracht. Die Druckausgleichsventile 33a, b werden nun geöffnet, bis im Füllraum 11 und im Prozessraum 12 wieder Umgebungsdruck P3 herrscht. In diesem Zustand können die Durchführung 13a und der Durchgang 13b oder die Abdeckung 14b wieder geöffnet werden. Die Glaskapsel 25 kann nun aus der Prozesskammer 10 entnommen werden.

In Fig. 2 ist eine bevorzugte Variante der erfindungsgemässen Prozesskammer 12 dargestellt. Hier ist zudem der Zustand nach der Abschmelzung dargestellt, mit der Siegelstelle 26 im Bereich der Abschmelzzone 16 und der versiegelten Glaskapsel 25.

Die Prozesskammer 12 weist hier einen druckdicht abdichtbaren Durchgang 13b auf, aus dem im Gebrauch der geschlossene Körper 22 des Gashohlkörpers 20 herausragt. Lediglich ein kleiner Bereich des Glashohlkörpers 20 beidseitig der Abschmelzzone 16 befindet sich im Gebrauch noch im Prozessraum 12. Dieser gesamte Bereich des Glashohlkörpers 20, einschliesslich des Bereichs in der Durchführung 14 und im Durchgang 13b, ist vorzugsweise als Glasrohr ausgestaltet, gegebenenfalls auch der gesamte geschlossene Körper des Glashohlkörpers 22. Diese einfache Form ermöglicht eine gute Abdichtung und ist einfach und kostengünstig herzustellen.

Zusätzlich weist die Prozesskammer 10 in dieser Ausführung einen Kühlraum 40 auf, zum Umhüllen dieses herausragenden geschlossenen Körpers 22 des Glashohlkörpers 20. Der Kühlraum 40 kann beispielsweise mit flüssigem Stickstoff auf etwa 77K gekühlt werden.

Im Gebrauch wird der Teil des Gashohlkörpers 20, der sich im Kühlraum 40 befindet, gekühlt, während sich das Füllgas 23 im Innern des Glashohlkörpers 20 mit dem Fülldruck P1 ausbreitet, bis der Glashohlkörper 20 im Bereich der Abschmelzzone 16 plastisch verschlossen wird. Durch die Abkühlung des Füllgases 23 verringert es sein Gasvolumen bei vorgegebenem Druck P1, was einer Verdichtung gleichkommt. Dies geschieht zusätzlich zum Fülldruck P1, mit dem das Füllgas 23 beaufschlagt wird, der eine zusätzliche Verdichtung verursacht.

Gemäss der Gasdruckgleichung pV=nRT (Druck x Volumen = Stoffmenge x Gaskonstante x absolute Temperatur) oder n=(pV)/(RT) macht die Kühlung von ca. 290-300K auf 77-80K einen Faktor von 3.5 bis 4 der Stoffmenge n, also etwa 3.8 aus, je nachdem, wie viel Prozent des Füllgases 23 innerhalb der späteren Glaskapsel 25 gekühlt werden kann. Wenn zusätzlich mit einem Fülldruck P1 von etwa 1'300 mbar anstatt 1'000 mbar gefüllt wird, so erhöht sich die Stoffmenge n in der Glaskapsel 25 nochmals um 30%. Insgesamt erhöht sich bei den angegebenen Werten für p und T die Stoffmenge n um etwa den Faktor 5. Der Enddruck in der Glaskapsel 25 bei Raumtemperatur ist demnach etwa 5'000 mbar.

Bei einer Länge der Glaskapsel 25 von typischerweise 770mm kann beispielsweise ein Bereich einer Länge von 736 mm gekühlt werden, was 95.5% des Volumens innerhalb der Glaskapsel 25 ausmacht.

Es ist auch möglich, höhere Fülldrucke P1 zu erzielen, beispielsweise bis 2000 mbar, bis 2500 mbar, bis 3000 mbar oder bis 3500 bar. Grenzen werden durch das Glas des Glashohlkörpers 20 gegeben, das den entsprechenden Druck P1 aushalten muss, ohne zu zerbrechen. Mit einem Fülldruck P1 von 3'500 mbar kann ein Enddruck von über 13'000 mbar in der Glaskapsel 25 erreicht werden.

Der hohe Fülldruck P1 wird erfindungsgemäss ermöglicht, indem der Abschmelzprozess im Prozessraum 12 unter einstellbarem Druck P2 durchgeführt wird, der stets höher ist als P1. Dadurch ist die Sicherheit, die im Umgang mit den genannten Gasen gefordert wird, erfüllt. Zudem bieten die Räume an sich eine weitere Sicherheit, die Gase auffangen zu können, sollte beim Abschmelzen ein Fehler auftreten.

In einer weiteren bevorzugten Ausgestaltung, ebenfalls in Fig. 2 dargestellt, kann der Prozessraum 12 mit einer Vakuumpumpe 31b zur Entleerung des Prozessraums 12 verbunden sein. Die Druckregeleinrichtung 32b des Prozessraums 12 ist dann mit einem Prozessgas-Behälter 34b verbindbar, zum Befüllen des Prozessraums 12 mit einem Prozessgas 35 aus dem Prozessgas-Behälter 34b und zum Rückführen des Prozessgas 35, vorzugsweise zurück in den Prozessgas-Behälter 34b. Als Prozessgas kann beispielsweise Argon verwendet werden.

Im Gebrauch wird der Prozessraum 12 vor der Beaufschlagung des Prozessdrucks P2 mit der Vakuumpumpe 31b entleert und anschliessend mit dem Prozessgas 35 befüllt. Nach der Versiegelung in der Abschmelzzone 16 wird das Prozessgas 35 mit der Druckregeleinrichtung 32b wieder aus dem Prozessraum 12 herausgepumpt, vorzugsweise zurück in den Prozessgas-Behälter 34b, bevor das Druckausgleichsventil 33b geöffnet wird. Auch hier können die Einrichtungen der Drücke P1, P2 sowie die spätere Entleerung und der anschliessende Druckausgleich zum Umgebungsdruck P3 simultan durchgeführt werden, oder eine nach der anderen, da die Räume 11, 12 drucktechnisch unabhängig voneinander sind.

Die Vorrichtung nach Fig. 1 kann auch mit einem Anschluss zu einem Prozessgas-Behälter 34b ausgestaltet sein, wie in Fig. 2 dargestellt, und/oder auch mit einem Kühlraum 40, welcher den linsenförmigen geschlossenen Körper 22 umgibt.

Bei der Durchführung 13a, beim Durchgang 14b, zwischen der Öffnung 14a und der Abdeckung 14b und/oder bei jeder anderen Öffnung zur Prozesskammer 10 kann eine Dichtung 15 angebracht sein, welche vorzugsweise aus Gummi, Metall, Kunststoff oder Steinfaser besteht.

Der Füllraum 11 und der Prozessraum 12 können als zwei separate Kammern ausgestaltet sein, wie in Fig. 3a und 3b dargestellt, oder als eine Kammer mit einer Trennwand mit der Durchführung 13a, wie in den Figuren 1 und 2 dargestellt. Sie können vorzugsweise aus Metall, Verbundstoffen, Fasermaterial, Glas, Saphir, Acrylglas, Kunststoff oder einer Mischung daraus bestehen.

In der Ausführungsvariante dargestellt in Fig, 3a und 3b bilden der Füllraum 11 und der Prozessraum 12 zwei separate Kammern, wobei mindestens eine Dichtung 15 bei der Durchführung 13a zwischen dem Füllraum 11 und dem Prozessraum 12 und vorzugsweise eine weitere Dichtung 15 zwischen dem Prozessraum 12 und entweder der Abdeckplatte 14b, wie hier dargestellt, oder dem Kühlraum 40 angeordnet ist. Zudem umfasst diese Prozesskammer 10 gemäss Fig. 3b eine Krafteinrichtung 19, welche im Gebrauch eine Kraft auf den Füllraum 11 in Richtung Prozessraum 12 ausüben kann.

Im Gebrauch wird nach dem Einbringen des Glashohlkörpers 20 in die Prozesskammer 10 nach Fig. 3 a und b mindestens die Durchführung 13a, vorzugsweise auch der Durchgang 13b, oder die Öffnung 14a mit der Abdeckung 14b, druckfest und gasdicht verschlossen, indem mittels der Krafteinrichtung 19 eine Kraft auf den Füllraum 11 in Richtung Prozessraum 12 ausgeübt wird, dargestellt durch Pfeile in Fig. 3b. Dadurch wird mindestens die Dichtung 15 zwischen der Füllkammer 11 und der Prozesskammer 12 am Füllraum 11, am Prozessraum 12 sowie am offenen Endbereich des Glashohlkörpers 21 gasdicht und druckfest abgedichtet.

Entsprechendes trifft auch für die weitere Dichtung 15 zwischen dem Prozessraum 12 und entweder der Abdeckplatte 14b oder beim Durchgang 14 zum Kühlraum 40 zu. Sobald die Kraft durch die Krafteinrichtung 19 wieder gelöst wird, wird auch der Glashohlkörper 20 wieder freigegeben und kann entnommen werden.

Alternativ kann als Abdichtung auch ein Adapter verwendet werden, nicht dargestellt, welcher vorgängig auf den Glashohlkörper 20, den Füllraum 11 oder den Prozessraum 12 aufgebracht, verschraubt oder verschweisst wird.

Vorzugsweise umfasst die Prozesskammer 10 eine Steuerung 50, mit der im Gebrauch die Befüllung, Entleerung und/oder das Einstellen der vorgegebenen Drücke P1, P2 im Füllraum 11 und/oder im Prozessraum 12 gesteuert wird. Die Steuerung kann aber auch von einem Benutzer von Hand durchgeführt werden.

Wie in Fig. 4 dargestellt kann die Prozesskammer 10 je zwei oder mehr Durchführungen 13a und Abschmelzzonen 16 mit Heizmitteln 17 zum gleichzeitigen Befüllen und Versiegeln von zwei oder mehr Glashohlkörpern 20 aufweisen.

Die Glashohlkörper 20 können inwendig beschichtet sein und/oder eine oder mehrere Einlagen 24 aufweisen, die vorgängig eingebracht wurden, wie in den Figuren 1, 2 und 4 dargestellt.

Anschliessend an die erfindungsgemässe Befüllung und Fertigstellung der Glaskapseln 25 können diese in weiteren Prozessen in kleinere Portionen geteilt werden. Dies kann durch Erwärmung und beispielsweise durch Verdrehung und/oder mechanische Einwirkung wie Quetschung geschehen, wobei wiederum eine Prozesskammer 10 verwendet werden kann.

### Bezugszeichenliste

- **10**: **Prozesskammer**
- 11: Füllraum
- 12: Prozessraum
- 13: a: Durchführung, druckdicht; b: Durchgang, druckfest
- 14: a: Öffnung b: Abdeckung
- 15: Dichtung
- 16: Abschmelzzone
- 17: Heizmittel
- 18: Energieversorgung
- 19: Krafteinrichtung
- **20**: **Glashohlkörper**
- 21: Offener Endbereich des Gashohlkörpers
- 22: Geschlossener Körper des Gashohlkörpers
- 23: Füllgas
- 24: Einlage oder Beschichtung im Geschlossener Körper des Glashohlkörpers
- 25: befüllter Glashohlkörper; Glaskapsel, versiegelt
- 26: Siegelstelle
- **30**: **a, b Leitung**
- 31: a, b Vakuumpumpe
- 32: a, b Druckregeleinrichtung
- 33: a, b Druckausgleichsventil
- 34: a: Füllgas-Behälter, b: Prozessgas- Behälter
- 35: Prozessgas
- **40**: **Kühlraum**
- **50**: **Steuerung**

- P1: Fülldruck
- P2: Prozessdruck
- P3: Umgebungsdruck

## Patentansprüche

1. Prozesskammer (10) zur Befüllung und Versiegelung eines Glashohlkörpers (20) mit einem offenen Endbereich (21) und einem geschlossenen Körper (22), der mit einem Füllgas (23), bestehend bei Standardbedingungen (1bar, 20°C) zu mindestens 50vol% aus Tritium, Deuterium und/oder Protium, gefüllt und gasdicht versiegelt werden soll, **dadurch gekennzeichnet, dass** die Prozesskammer (10) einen Füllraum (11) sowie einen Prozessraum (12) aufweist, die im Gebrauch jeweils gasdicht und druckfest verschlossen sind,
wobei
- der Füllraum (11) mit einer Vakuumpumpe (31a) zur Entleerung des Füllraums (11) verbunden ist sowie mit einer Druckregeleinrichtung (32a), die mit einem Füllgas-Behälter (34a) verbindbar ist, zum Befüllen des Füllraums (11) mit dem Füllgas (23) bis zu einem vorgegebenen Fülldruck (P1) von ≥ 1'000 mbar, der höher ist als der Umgebungsdruck (P3), und zur Entnahme von restlichem Füllgas (23) aus dem Füllraum (11), vorzugsweise zu dessen Rückführung in den Füllgas-Behälter (34a), sowie mit einem Druckausgleichsventil (33a), um Umgebungsdruck (P3) im entleerten Füllraum (11) zu erzielen;
- und der Prozessraum (12) eine Druckregeleinrichtung (32b) aufweist zum Erzielen eines vorgegebenen Prozessdrucks (P2) im Prozessraum (12), der höher ist als der Fülldruck (P1), sowie ein Druckausgleichsventil (33b), um Umgebungsdruck (P3) im Prozessraum (12) zu erzielen,
- und zwischen dem Füllraum (11) und dem Prozessraum (12) eine druckdicht abdichtbare Durchführung (13a) ausgebildet ist, zum Durchführen eines offenen Endbereichs (21) des Glashohlkörpers (20) aus dem Prozessraum (12) in den Füllraum (11),
- und wobei der Prozessraum (12) über eine Abschmelzzone (16) mit einem Heizmittel (17) verfügt, in welcher ein Glashohlkörper (20) bis zu seiner plastischen Verformbarkeit lokal erwärmt werden kann.

2. Prozesskammer nach Anspruch 1, **dadurch gekennzeichnet, dass** der Prozessraum (12) einen druckdicht abdichtbaren Durchgang (13b) aufweist, aus dem im Gebrauch der geschlossene Körper (22) des Gashohlkörpers (20) herausragt und die Prozesskammer (10) zusätzlich einen Kühlraum (40) aufweist, zum Umhüllen und Kühlen dieses herausragenden geschlossenen Körpers (22) des Glashohlkörpers (20), wobei der Kühlraum (40) vorzugsweise mit flüssigem Stickstoff gekühlt ist.

3. Prozesskammer nach einem der vorhergehenden Ansprüche, **dadurch gekennzeichnet, dass** der Prozessraum (12) mit einer Vakuumpumpe (31b) zur Entleerung des Prozessraums (12) verbunden ist, und dass die Druckregeleinrichtung (32b) des Prozessraums (12) mit einem Prozessgas-Behälter (34b) verbindbar ist, zum Befüllen des Prozessraums (12) mit einem Prozessgas (35) aus dem Prozessgas-Behälter (34b) und vorzugsweise zum Rückführen des Prozessgas (35) in den Prozessgas-Behälter (34b).

4. Prozesskammer nach einem der vorhergehenden Ansprüche, wobei der Füllraum (11) und der Prozessraum (12) zwei separate Kammern bilden, und wobei mindestens eine Dichtung (15) bei der Durchführung (13a) zwischen dem Füllraum (11) und dem Prozessraum (12) angeordnet ist, umfassend eine Krafteinrichtung (19), welche im Gebrauch eine Kraft auf den Füllraum (11) in Richtung Prozessraum (12) ausüben kann, wodurch die Dichtung (15) bei der Durchführung (13a) durch diese Kraft am Füllraum (11), am Prozessraum (12) sowie am offenen Endbereich des Glashohlkörpers (21) gasdicht und druckfest abdichten kann.

5. Prozesskammer nach einem der vorhergehenden Ansprüche, **gekennzeichnet durch** eine Steuerung (50) zur Steuerung der Befüllung, Entleerung und/oder des Einstellens der vorgegebenen Drücke (P1, P2) im Füllraum (11) und/oder im Prozessraum (12).

6. Prozesskammer nach einem der vorhergehenden Ansprüche, **gekennzeichnet durch** je zwei oder mehr Durchführungen (13a) und Abschmelzzonen (16) zum gleichzeitigen Befüllen von zwei oder mehr Glashohlkörpern (20).

7. Verfahren zum Befüllen und Versiegeln eines Glashohlkörpers (20) mit einem Füllgas (23) aus mindestens 50vol% Tritium, Deuterium und/oder Protium bei Standardbedingungen zu einer Glaskapsel (25) unter Verwendung einer Prozesskammer (10) nach einem der vorhergehenden Ansprüche und eines Glashohlkörpers (20) mit einem geschlossenen Körper (22) und einem offenen Endbereich (21) zur Befüllung, **dadurch gekennzeichnet,**
- **dass** der Glashohlkörper (20) derart in die Prozesskammer (10) eingebracht wird, dass er die Abschmelzzone (16) durchquert und dass der offene Endbereich (21) von der Abschmelzzone (16) her den Durchgang (13a) durchquert und im Füllraum (11) endet, wobei der geschlossene Körper (22) mindestens teilweise im Prozessraum (12) ist;
- die Durchführung (13a) gegen den Glashohlkörper (20) druckfest verschlossen wird,
- gegebenenfalls weitere Durchgänge (13b, 14a, 14b) druckfest verschlossen werden, bis der Füllraum (11) und der Prozessraum (12) gasdicht und druckfest verschlossen sind,
- der Füllraum (11) mit der Vakuumpumpe (31a) vakuumieret und schliesslich mit der Druckregeleinrichtung (32a) mit dem Füllgas (23) bis zum gewünschten Fülldruck (P1) ≥ 1'000 mbar gefüllt wird, wobei sich das Füllgas (23) im Innern des Glashohlkörpers (20) ausbreitet,
- der Prozessraum (12) mit der Druckregeleinrichtung (32b) unter den vorgesehenen Prozessdruck (P2) gesetzt wird, der um mindestens 10 mbar, vorzugsweise um 100 mbar grösser ist als der Fülldruck (P1),
- die Abschmelzzone (16) im Prozessraum (12) mit dem Heizmittel (17) erwärmt wird, bis der Glashohlkörper (20) im Bereich der Abschmelzzone (16) plastisch geworden ist und durch den geringeren Innendruck P1 im Glashohlkörper (20) nach innen gedrückt wird und den Glashohlkörper (20) dadurch lokal versiegelt, zur Schaffung einer Glaskapsel (25), die an einer Siegelstelle (26) verschlossen ist,
- das Füllgas (23) mit der Druckregeleinrichtung (32a) wieder aus dem Füllraum (11) herausgepumpt wird,
- die Druckausgleichsventile (33a, b) geöffnet werden, bis im Füllraum (11) und im Prozessraum (12) Umgebungsdruck (P3) erreicht ist,
- die Durchführung (13a) wieder geöffnet wird,
- und die Glaskapsel (25) aus der Prozesskammer (10) entnommen wird.

8. Verfahren nach Anspruch 7, **dadurch gekennzeichnet, dass** der Fülldruck (P1) zwischen 1'300-3'500 mbar oder bis 5'000 mbar ist und der Prozessdruck (P2) jeweils zwischen 10 und 200 mbar, vorzugsweise jeweils 100 mbar höher ist als der Fülldruck (P1).

9. Verfahren nach Anspruch 7 oder 8 unter Verwendung einer Prozesskammer (10) nach Anspruch 3, **dadurch gekennzeichnet, dass** der Prozessraum (12) vor der Beaufschlagung des Prozessdrucks (P2) mit der Vakuumpumpe (31b) entleert und anschliessend mit einem Prozessgas (35), beispielsweise Argon, gefüllt wird, welches mit der Druckregeleinrichtung (32b) wieder aus dem Prozessraum (12) herausgepumpt wird, bevor das Druckausgleichsventil (33b) geöffnet wird.

10. Verfahren nach einem der Ansprüche 7 bis 9 unter Verwendung einer Prozesskammer (10) nach Anspruch 2, **dadurch gekennzeichnet, dass** der geschlossene Körper (22) des Gashohlkörpers (20) aus dem Prozessraum (12) herausragt und vom Kühlraum (40) umhüllt und gekühlt wird, während sich das Füllgas (23) im Innern des Glashohlkörpers (20) ausbreitet, bis der Glashohlkörper (20) im Bereich der Abschmelzzone (16) plastisch verschlossen wird.

11. Verfahren nach einem der Ansprüche 7 bis 10, **dadurch gekennzeichnet, dass** im geschlossenen Körper (22) eine oder mehrere Einlagen (24) eingebracht sind oder eine innere Beschichtung aufgetragen ist.

12. Verfahren nach einem der Ansprüche 7 bis 11 sowie unter Verwendung einer Prozesskammer (10) nach Anspruch 4, **dadurch gekennzeichnet, dass** nach dem Einbringen des Glashohlkörpers (20) in die Prozesskammer (10) die Durchführung (13a) druckfest und gasdicht verschlossen wird, indem mittels der Krafteinrichtung (19) eine Kraft auf den Füllraum (11) in Richtung Prozessraum (12) ausgeübt wird, wodurch die Dichtung (15) zwischen dem Füllraum (11) und dem Prozessraum (12) durch diese Kraft am Füllraum (11), am Prozessraum (12) sowie am offenen Endbereich des Glashohlkörpers (21) gasdicht und druckfest abdichtet.

13. Verfahren nach einem der Ansprüche 7 bis 12 sowie unter Verwendung einer Prozesskammer (10) nach Anspruch 5, **dadurch gekennzeichnet, dass** mit der Steuerung (50) die Befüllung, Entleerung und/oder das Einstellen der vorgegebenen Drücke (P1, P2) im Füllraum (11) und/oder im Prozessraum (12) gesteuert wird.

14. Verfahren nach einem der Ansprüche 7 bis 13 sowie unter Verwendung einer Prozesskammer (10) nach Anspruch 6, **dadurch gekennzeichnet, dass** zwei oder mehr Glashohlkörper (20) in die Prozesskammer (10) eingebracht und somit gleichzeitig zwei oder mehr Glashohlkörper (20) befüllt und versiegelt werden.

15. Glashohlkörper befüllt und zu einer Glaskapsel (25) versiegelt nach einem Verfahren der Ansprüche 7 bis 14, **gekennzeichnet durch** einen Fülldruck bei Raumtemperatur von mindestens 4'000 mbar, oder von mindestens 5'000mbar.
